# EUROPÄISCHE PATENTSCHRIFT

(11) **EP 1 842 636 B1**
(45) Veröffentlichungstag und Bekanntmachung des Hinweises auf die Patenterteilung: **25.06.2008**
(21) Anmeldenummer: 07014900.0
(22) Anmeldetag: 06.02.2006
(51) Int. Cl.: B27C 5/06, B65G 15/60, B27F 5/02

(54) **Werkstücktransportvorrichtung**
Workpiece transport device
Dispositif de transport de pièces à usiner

(30) Priorität: 29.04.2005 DE 102005019954
(43) Veröffentlichungstag der Anmeldung: 10.10.2007
(62) Teilanmeldung aus: 06002343.9
(73) Patentinhaber: Homag Holzbearbeitungssysteme AG, 72296 Schopfloch (DE)
(72) Erfinder: Gauss, Achim, 72280 Dornstetten/Hallwangen (DE); Rathgeber, Peter, 72280 Dornstetten (DE)
(74) Vertreter: HOFFMANN EITLE

(56) Entgegenhaltungen:
- EP-A- 1 516 697
- WO-A-20/04113037
- DE-C1- 10 249 775

## Beschreibung

### Technisches Gebiet

Die vorliegende Erfindung betrifft eine Werkstücktransportvorrichtung nach dem Obergebriff von Anspruch 1.

### Stand der Technik

Eine Werkstücktransportvorrichtung der eingangs genannten Art ist beispielsweise aus der EP 1 516 697 A2 bekannt und besitzt einen endlos umlaufenden Transportriemen, auf dessen Obertrum die Werkstücke reib- und/oder formschlüssig gehalten werden, und eine feststehende Führungsvorrichtung für den Transportriemen, die eine dessen Obertrum entlang der Transportstrecke aufnehmende Führungsschiene aufweist, wobei die Führungsschiene an ihrer Oberseite eine formschlüssig an den Riemen angepasste Laufrinne besitzt und einen Boden aufweist, in welchem mit einer Druckluftquelle verbundene Luftauslassöffnungen angeordnet sind.

Derartige Werkstücktransportvorrichtungen werden vor allem eingesetzt, um schmale, plattenförmige Werkstücke wie beispielsweise Laminat- oder Fertigparkettpaneele während der Bearbeitung ihrer Schmalseiten - beispielsweise mit Nut und Feder oder "Klick"-Eingriffselementen - zu transportieren. Bei dieser Durchlaufbearbeitung müssen sehr enge Bearbeitungstoleranzen eingehalten werden, damit die Paneele beim späteren Einsatz, beispielsweise als Bodenbelag, sauber und bündig miteinander verbunden werden können. Die erforderliche Einhaltung der Bearbeitungstoleranzen wird darüber hinaus durch die hohen Transportgeschwindigkeiten von beispielsweise bis zu 200 m/min erschwert, die heutzutage für eine rationelle Durchlaufproduktion angestrebt werden.

Ferner offenbart die DE 102 49 775 C1 eine Maschine zum Profilieren der Schmalflächenseiten plattenförmiger Werkstücke mit einer Geradführungseinrichtung. Bei dieser Maschine gleiten die Werkstücke auf einer stationären Gleitbahn, die Luftauslassdüsen aufweist, um zwischen Gleitbahn und Werkstück ein Luftpolster zu erzeugen Allerdings sind die erzielbaren Transportgeschwindigkeiten aufgrund der unvermeidlichen Reibung zwischen Gleitbahn und Werkstück begrenzt.

### Darstellung der Erfindung

Es ist Aufgabe der vorliegenden Erfindung, eine Werkstücktransportvorrichtung der eingangs genannten Art bereitzustellen, die bei hohen Transportgeschwindigkeiten eine Bearbeitung der transportierten Werkstücke mit geringer Toleranz ermöglicht.

Diese Aufgabe wird erfindungsgemäß durch eine Werkstücktransportvorrichtung nach Anspruch 1 gelöst. Vorteilhafte Weiterbildungen der Erfindung sind in den abhängigen Ansprüchen angegeben.

Der Erfindung liegt der Gedanke zugrunde, einen reibenden bzw. gleitenden Kontakt zwischen Werkzeug und Transportvorrichtung nur dort vorzusehen, wo er im Hinblick auf die geforderten Bearbeitungstoleranzen effektiv ist und die erzielbare Transportgeschwindigkeit möglichst wenig beeinträchtigt. Vor diesem Hintergrund ist erfindungsgemäß vorgesehen, dass eine Werkstücktransportvorrichtung der eingangs genannten Art eine Geradführungseinrichtung aufweist, die dazu ausgelegt ist, in eine in dem zu transportierenden Werkstück vorgesehene Führungsnut einzugreifen.

Auf diese Weise lässt sich die Positionierung der Werkstücke während des Transport- und Bearbeitungsvorganges deutlich steigern, ohne dass spürbare Abstriche bei den erzielbaren Transportgeschwindigkeiten zu verzeichnen sind.

Gemäß der vorliegenden Erfindung ist vorgesehen, dass die Werkstücktransportvorrichtung ferner mindestens eine Stützkufe aufeist, die sich seitlich neben dem Transportriemen im Wesentlichen parallel zu diesem erstreckt, und deren Oberseite im Wesentlichen bündig zu der Oberseite des Obertrums des Transportriemens ist. Durch die mindestens eine Stützkufe lässt sich eine besonders genaue Bezugsebene für die geförderten Werkstücke definieren, während gleichzeitig eine stabile Abstützung der Werkstücke während des Bearbeitungsvorgangs ermöglicht wird.

Dabei hat es sich erfindungsgemäß als vorteilhaft erwiesen, zusätzlich zu der Stützkufe mindestens eine federnd gelagerte Druckschiene vorzusehen, die sich oberhalb der Stützkufe im Wesentlichen parallel zu dieser erstreckt. Durch die federnd gelagerte Druckschiene lassen sich in Zusammenwirkung mit der darunter liegenden Stützkufe plattenförmige Werkstücke mit variierenden Dicken stabil führen, um eine genaue Positionierung der Werkstücke zu erzielen und ein Ausweichen derselben während des Bearbeitungsvorgangs zu verhindern.

Gemäß einer Weiterbildung der vorliegenden Erfindung ist vorgesehen, dass die Geradführungseinrichtung oberhalb des Transportriemens angeordnet und dazu ausgelegt ist, in eine Führungsnut einzugreifen, die in einer während des Werkstücktransports oben liegenden Oberfläche des Werkstücks vorgesehen ist. Durch diese Anordnung kann das zu bearbeitende Werkstück mit seiner so genannten Gutseite, die der mit einer Führungsnut versehenen Oberfläche des Werkstücks üblicherweise gegenüberliegt, auf dem Transportriemen liegend transportiert werden. Hierdurch wird die Gutseite des Werkstücks während des Transports vor möglichen Beschädigungen geschützt. Darüber hinaus bietet diese Art der Werkstückförderung jedoch auch Vorteile im Hinblick auf die erzielbaren Bearbeitungstoleranzen der Schmalseiten. Dabei ist zu beachten, dass die sogenannte Gutseite üblicherweise das Referenzniveau für die Lage der in die Schmalseiten einzubringenden Profilierungen bildet. Bei einem Transport der Werkstücke mit nach unten gerichteter Gutseite lässt sich die Auflageebene der Gutseite wirksam als Bezugsebene für die Bearbeitungswerkzeuge definieren, und hierdurch wird ein möglicher Einfluss von Dickentoleranzen des Werkstücks auf die Bearbeitungstoleranzen der Schmalseiten ausgeschlossen und die Notwendigkeit von Justierungen der Bearbeitungswerkzeuge in Bezug auf das zu bearbeitende Werkstück wird minimiert.

Gemäß einer Weiterbildung der vorliegenden Erfindung weist die Werkstücktransportvorrichtung eine Oberdruckeinrichtung auf, die bevorzugt einen Antrieb mit Freilauf besitzt. Durch die Oberdruckeinrichtung lässt sich das zu bearbeitende Werkstück noch stabiler und präziser fördern, mit entsprechend verbesserter Bearbeitungstoleranz. Dabei trägt der mit einem Freilauf versehene Antrieb der Oberdruckeinrichtung dazu bei, sicherzustellen, dass die Transportgeschwindigkeit des Werkstücks auch während der Bearbeitung nicht unter einen vorbestimmten Geschwindigkeitsschwellwert abfällt.

Die Geradführungseinrichtung kann im Rahmen der vorliegenden Erfindung auf vielfältige Art und Weise ausgestaltet sein. Als besonders vorteilhaft hat es sich erwiesen, dass die Geradführungseinrichtung durch mindestens ein Führungsschwert gebildet ist, das bevorzugt stationär angeordnet ist. Es ist jedoch ebenso möglich, dass die Geradführungseinrichtung als Teil eines an der Oberdruckeinrichtung umlaufenden Riemens ausgebildet ist.

Um auf das Vorsehen mehrerer Transportriemen oder Oberdruckeinrichtungen verzichten zu können, ist gemäß einer Weiterbildung vorgesehen, dass die Geradführungseinrichtung seitlich neben dem Transportriemen und/oder der Oberdruckeinrichtung angeordnet ist. Dabei hat es sich als besonders vorteilhaft erwiesen, die Geradführungseinrichtung an der Oberdruckeinrichtung anzubringen, wodurch sich eine besonders einfache und stabile Konstruktion mit entsprechend stabiler Führung der Werkstücke ergibt.

Obgleich zumindest eine Stützkufe und Druckschienen prinzipiell entlang des gesamten Obertrums des Transportriemens angeordnet sein können, hat es sich als vorteilhaft erweisen, dass die Stützkufe und/oder die Druckschiene sich nur entlang eines Teilabschnitts des Obertrums erstrecken, dessen Länge bevorzugt weniger als 20%, besonders bevorzugt weniger als 10% der Länge des Obertrums beträgt. Auf diese Weise können Stützkufen und Druckschienen gezielt im Bereich der Bearbeitungswerkzeuge angeordnet werden, während sich gleichzeitig die Reibungskräfte während des Transportvorgangs vermindern. In dieser Hinsicht hat es sich auch als vorteilhaft erwiesen, dass die Stützkufe und/oder die Druckschiene an ihren einander zugewandten Abschnitten Gleitelemente aufweisen, die beispielsweise aus PTFE oder einem anderen geeigneten Material mit geringem Reibungskoeffizienten bestehen.

### Kurze Beschreibung der Zeichnung

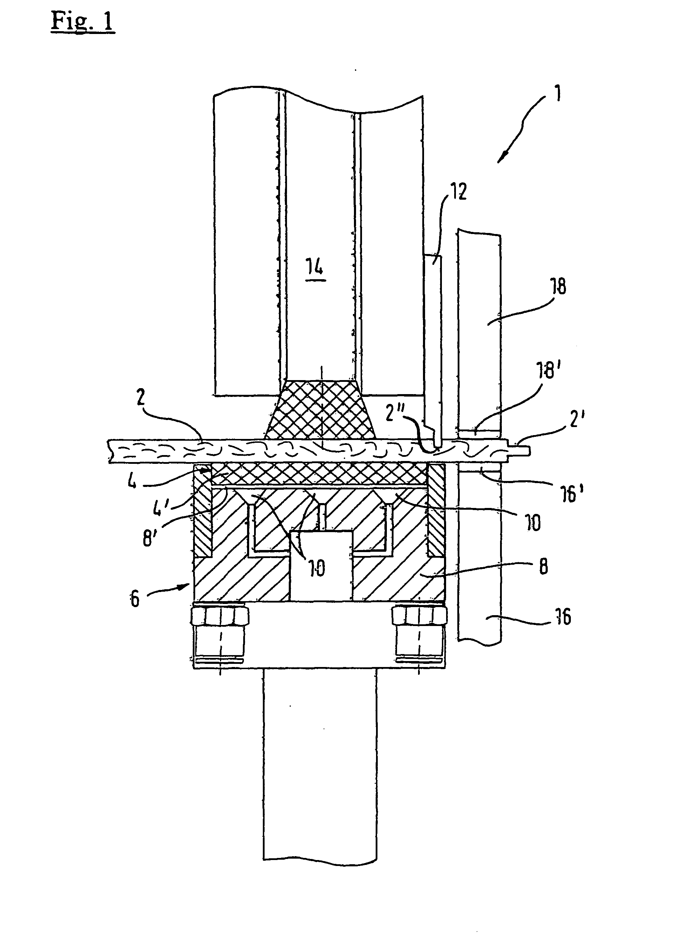

Fig. 1 zeigt schematisch eine Seitenansicht einer Werkstücktransportvorrichtung als Ausführungsform der vorliegenden Erfindung.

### Ausführliche Beschreibung bevorzugter Ausführungsformen

Bevorzugte Ausführungsformen der vorliegenden Erfindung werden nachfolgend ausführlich unter Bezugnahme auf die begleitende Zeichnung beschrieben.

Fig. 1 zeigt schematisch eine Seitenansicht einer Werkstücktransportvorrichtung 1 als beispielhafte, bevorzugte Ausführungsform der vorliegenden Erfindung. Die Werkstücktransportvorrichtung 1 dient dazu, zu bearbeitende, plattenförmige Werkstücke 2 im Durchlauf durch eine formgebend bearbeitende Maschine zu transportieren, die dazu ausgelegt ist, die freiliegenden Seitenflächen 2' der Werkstücke 2 mit Profilierungen wie beispielsweise Nut und Feder oder sogenannten "Klick"-Eingriffselementen zu versehen.

Die in Fig. 1 gezeigte Werkstücktransportvorrichtung 1 umfasst einen endlos umlaufenden Transportriemen 4, von dem in Fig. 1 nur dessen Obertrum 4' gezeigt ist und der dazu ausgelegt ist, die zu transportierenden Werkstücke 2 reibschlüssig zu lagern und zu fördern. Der Transportriemen 4 ist auf einer feststehenden Führungsvorrichtung 6 geführt, die eine dessen Obertrum 4' entlang einer Transportstrecke aufnehmende Führungsschiene 8 aufweist. Die Führungsschiene 8 besitzt an ihrer Oberseite eine Laufrinne 8', die formschlüssig an den jeweiligen Riemen 4 angepasst ist, und weist einen Boden auf, in welchem Luftauslassöffnungen 10 angeordnet sind, die mit einer nicht gezeigten Druckluftquelle kommunizieren. Hierdurch lässt sich zwischen dem Obertrum 4' des Transportriemens 4 und der Führungsschiene 8 ein Luftkissen erzeugen, das einen sanften und reibungsarmen Transportbetrieb ermöglicht.

Ferner weist die Werkstücktransportvorrichtung 1 eine Oberdruckeinrichtung 14 auf, die in der vorliegenden Ausführungsform durch einen auf Rollen geführten, umlaufenden Riemen gebildet ist. Die Rollen der Oberdruckeinrichtung sind durch einen Antrieb mit Freilauf angetrieben. Seitlich an der Oberdruckeinrichtung 14 ist ein Führungsschwert bzw. sind gegebenenfalls mehrere Führungsschwerter 12 hintereinander angebracht. Das mindestens eine Führungsschwert 12 erstreckt sich von der Oberdruckeinrichtung 14 nach unten und ist dazu ausgelegt, in eine in dem zu transportierenden Werkstück 2 vorgesehene Führungsnut 2'' während des Transports einzugreifen. Bei der gezeigten Konfiguration wird das Werkstück 2 somit mit seiner "Gutseite" nach unten auf dem Transportriemen 4 aufliegend transportiert, während die der Gutseite gegenüberliegende Führungsnut 2" nach oben gerichtet ist.

Weiterhin umfasst die Werkstücktransportvorrichtung der vorliegenden Ausführungsform eine Anzahl von paarweise vorgesehenen Stützkufen 16 und Druckschienen 18. Die Stützkufen 16 erstrecken sich seitlich neben dem Transportriemen 4 im Wesentlichen parallel zu diesem, wobei deren Oberseite im Wesentlichen bündig zu der Oberseite des Obertrums 4' des Transportriemens 4 ist. Die Druckschienen 18 erstrecken sich im Wesentlichen parallel zu der zugeordneten Stützkufe 16 und sind federnd derart gelagert, dass der Abstand zwischen der Stützkufe 16 und der entsprechenden Druckschiene 18 an die Dicke der transportierten Werkstücke 2 angepasst werden kann. Dabei sind die Stützkufen- und Druckschienenpaare örtlich entlang des Transportriemens 4 an denjenigen Stellen angeordnet, wo eine Bearbeitung der Werkstücke durch nicht gezeigte Bearbeitungswerkzeuge erfolgen soll. Die Länge der Stützkufen und Druckschienen kann in der Transportrichtung beispielsweise 200 mm betragen, während die Transportstrecke eine Gesamtlänge von beispielsweise 6000 mm besitzen kann.

Um die an den Stützkufen 16 und Druckschienen 18 auftretende Gleitreibung gegenüber dem Werkstück 2 zu vermindern und somit einen sanften und präzisen Werkstücktransport zu ermöglichen, weisen die Stützkufe 16 und die Druckschiene 18 an ihren einander zugewandten Abschnitten Gleitelemente 16', 18' auf, die beispielsweise aus PTFE oder einem anderen geeigneten Material mit geringem Reibungskoeffizienten bestehen.

Der Betrieb der erfindungsgemäßen Werkstücktransportvorrichtung vollzieht sich beispielsweise wie folgt. Zunächst wird das plattenförmige Werkstück 2 in einer der Werkstücktransportvorrichtung vorgeschalteten Sägevorrichtung mit einer Führungsnut 2'' versehen, die sich kontinuierlich in Längsrichtung des Werkstücks, d.h. in der späteren Transportrichtung erstreckt. Anschließend wird das Werkstück 2 in die Werkstücktransportvorrichtung in den Spalt zwischen dem Obertrum 4' und der Oberdruckeinrichtung 14 zugeführt. Dabei greift das vordere (untere) Ende des am weitesten stromaufwärts gelegenen Führungsschwerts 12 in die Führungsnut 2'' des zu transportierenden Werkstücks 2 ein.

Durch die Antriebskraft des Transportriemens 4 und gegebenenfalls der Oberdruckeinrichtung 14 wird das Werkstück 2 entlang der Transportstrecke gefördert, bis es das erste Paar von Stützkufe 16 und Druckschiene 18 erreicht und in den dazwischen gebildeten Spalt eintritt. Dabei passt sich die Höhenlage der federnd gelagerten Druckschiene 18 an die Dicke des geförderten Werkstücks 2 an. Im Bereich der jeweiligen Stützkufen 16 und Druckschienen 18 wird das geförderte Werkstück 2 im Bereich der freiliegenden Seitenfläche 2' durch nicht gezeigte Bearbeitungswerkzeuge mit einer gewünschten Profilierung versehen. Dieser Vorgang kann sich entlang der Transportstrecke mehrfach wiederholen. Abschließend wird das Werkstück aus der Werkstücktransportvorrichtung 1 ausgefördert und gegebenenfalls an eine nach gelagerte Bearbeitungsstufe weitergegeben.

## Patentansprüche

1. Werkstücktransportvorrichtung (1) für eine die Werkstücke (2) im Durchlauf an dabei freiliegenden Seitenflächen (2') formgebend bearbeitende Maschine, mit
mindestens einem endlos umlaufenden Transportriemen (4), auf dessen Obertrum (4') die Werkstücke (2) reib- und/oder formschlüssig gehalten werden, und
mit einer feststehenden Führungsvorrichtung (6) für den Transportriemen (4), die eine dessen Obertrum (4') entlang einer Transportstrecke aufnehmende Führungsschiene (8) aufweist, wobei
die Führungsschiene (8) an ihrer Oberseite einen Boden aufweist, in welchem mit einer Druckluftquelle verbundene Luftauslassöffnungen (10) angeordnet sind,
**dadurch gekennzeichnet, dass**
die Werkstücktransportvorrichtung (1) eine Geradführungseinrichtung (12) aufweist, die dazu ausgelegt ist, in eine in dem zu transportierenden Werkstück (2) vorgesehene Führungsnut (2'') einzugreifen, ferner mindestens eine Stützkufe (16) aufweist, die sich seitlich neben dem Transportriemen (4) im wesentlichen parallel zu diesem erstreckt, und denen Oberseite im wesentlichen bündig zu der Oberseite des Obertrums (4') des Transportriemens (4) ist und
ferner mindestens eine federnd gelagerte Druckschiene (18) aufweist, die sich oberhalb der Stützkufe (16) im wesentlichen parallel zu dieser erstreckt.

2. Werkstücktransportvorrichtung nach Anspruch 1, **dadurch gekennzeichnet, dass** die Geradführungseinrichtung (12) oberhalb des Transportriemens (4) angeordnet und dazu ausgelegt ist, in eine Führungsnut (2'') einzugreifen, die in einer während des Werkstücktransports oben liegenden Oberfläche des Werkstücks (2) vorgesehen ist.

3. Werkstücktransportvorrichtung nach Anspruch 1 oder 2, **dadurch gekennzeichnet, dass** sie ferner eine Oberdruckeinrichtung (14) aufweist, die bevorzugt einen Antrieb mit Freilauf besitzt.

4. Werkstücktransportvorrichtung nach einem der vorhergehenden Ansprüche, **dadurch gekennzeichnet, dass** die Geradführungseinrichtung (12) durch mindestens ein Führungsschwert (12) gebildet ist, das bevorzugt stationär angeordnet ist.

5. Werkstücktransportvorrichtung nach einem der vorhergehenden Ansprüche, **dadurch gekennzeichnet, dass** die Geradführungseinrichtung (12) seitlich neben dem Transportriemen (4) und/oder der Oberdruckeinrichtung (14) angeordnet ist.

6. Werkstücktransportvorrichtung nach einem der vorhergehenden Ansprüche, **dadurch gekennzeichnet, dass** die Geradführungseinrichtung (12) an der Oberdruckeinrichtung (14) angebracht ist.

7. Werkstücktransportvorrichtung nach einem der vorhergehenden Ansprüche, **dadurch gekennzeichnet, dass** die Stützkufe (16) und/oder die Druckschiene (18) sich nur entlang eines Teilabschnitts des Obertrums (4') erstrecken, dessen Länge bevorzugt weniger als 20 %, besonders bevorzugt weniger als 10 % der Länge des Obertrums (4') beträgt.

8. Werkstücktransportvorrichtung nach einem der vorhergehenden Ansprüche, **dadurch gekennzeichnet, dass** die Stützkufe (16) und/oder die Druckschiene (18) an ihren einander zugewandten Abschnitten Gleitelemente (16' , 18') aufweisen.

9. Werkstücktransportvorrichtung nach einem der vorhergehenden Ansprüche, **dadurch gekennzeichnet, dass** die Führungsschiene (8) an ihrer Oberseite eine formschlüssig an den jeweiligen Riemen angepasste Laufrinne (8') besitzt.

## Claims

1. Workpiece transport device (1) for a machine machining in shaping manner exposed side surfaces (2') of the workpieces (2) as they pass by having at least one continuously circulating transport belt (4) on whose upper side (4') the workpieces (2) are held by friction and/or in form-fitting manner and having a fixed guide device (6) for the transport belt (4) comprising a guide rail (8) accommodating the upper run (4') thereof along a transport pathway, wherein the guide rail (8) has on its upper side a floor in which air outlet openings (10) connected to a compressed air source are arranged, **characterised in that** the workpiece transport device (1) comprises a straight-line guide device (12) designed for the purpose of engaging in a guide groove (2") provided in the workpiece (2) to be transported, further comprises at least one support runner (16) which extends laterally alongside and substantially parallel to the transport belt (4) and whose upper side is substantially flush with the upper side of the upper run (4') of the transport belt (4) and further comprises at least one elastically mounted pressure rail (18) extending above and substantially parallel to the support runner (16).

2. Workpiece transport device according to claim 1, **characterised in that** the straight-line guide device (12) is arranged above the transport belt (4) and is designed for the purpose of engaging in a guide groove (2") provided in a surface of the workpiece (2) located on top during transport of the workpiece.

3. Workpiece transport device according to claim 1 or 2, **characterised in that** it further comprises a top pressure device (14) which preferably possesses a drive with free running state.

4. Workpiece transport device according to any of the preceding claims, **characterised in that** the straight-line guide device (12) is formed by at least one guide tongue (12) that is preferably arranged in stationary manner.

5. Workpiece transport device according to any of the preceding claims, **characterised in that** the straight-line guide device (12) is arranged laterally alongside the transport belt (4) and/or the top pressure device (14).

6. Workpiece transport device according to any of the preceding claims, **characterised in that** the straight-line guide device (12) is attached to the top pressure device (14).

7. Workpiece transport device according to any of the preceding claims, **characterised in that** the support runner (16) and/or the pressure rail (18) extend along only part of the upper run (4') whose length is preferably less than 20 %, particularly preferably less than 10 % of the length of the upper run (4').

8. Workpiece transport device according to any of the preceding claims, **characterised in that** the support runner (16) and/or the pressure rail (18) have sliding elements (16', 18') on their sections facing towards one another.

9. Workpiece transport device according to any of the preceding claims, **characterised in that** the guide rail (8) possesses on its upper side a track channel (8') adapted in form-fitting manner to the belt in question.

## Revendications

1. Dispositif de transport de pièces à usiner (1) pour une machine travaillant des pièces à usiner (2) en leur donnant une forme, au passage, au niveau de faces latérales (2') exposées, comportant
au moins une courroie de transport (4) en circulation sans fin, sur le brin supérieur (4') de laquelle les pièces à usiner (2) sont maintenues par une liaison par friction et/ou par correspondance de forme, et
présentant un dispositif de guidage (6) fixe pour la courroie de transport (4), qui présente un rail de guidage (8) recevant son brin supérieur (4') le long d'un trajet de transport,
le rail de guidage (8) présentant au niveau de sa face supérieure un fond, dans lequel sont agencées des ouvertures de sortie d'air (10) reliées à une source d'air comprimé,
**caractérisé en ce que**
le dispositif de transport de pièces à usiner (1) présente un dispositif de guidage rectiligne (12), qui est conçu pour entrer en prise dans une rainure de guidage (2") prévue dans la pièce à usiner à transporter (2),
présente en outre au moins un patin support (16), qui s'étend latéralement à côté de la courroie de transport (4) de manière essentiellement parallèle à celle-ci et dont la face supérieure est essentiellement en affleurement avec la face supérieure du brin supérieur (4') de la courroie de transport (4), et
présente en outre au moins un rail de pression (18) monté de manière élastique, qui s'étend au-dessus du patin support (16) de manière essentiellement parallèle à celui-ci.

2. Dispositif de transport de pièces à usiner selon la revendication 1, **caractérisé en ce que** le dispositif de guidage rectiligne (12) est agencé au-dessus de la courroie de transport (4) et est conçu pour entrer en prise dans une rainure de guidage (2"), qui est prévue dans une surface de la pièce à usiner (2) située en haut pendant le transport de la pièce à usiner.

3. Dispositif de transport de pièces à usiner selon la revendication 1 ou 2, **caractérisé en ce qu'**il présente en outre un dispositif de pression par le haut (14), qui dispose de préférence d'un entraînement avec roue libre.

4. Dispositif de transport de pièces à usiner selon l'une quelconque des revendications précédentes, **caractérisé en ce que** le dispositif de guidage rectiligne (12) est formé par au moins une lame de guidage (12) qui est agencée de préférence de manière stationnaire.

5. Dispositif de transport de pièces à usiner selon l'une quelconque des revendications précédentes, **caractérisé en ce que** le dispositif de guidage rectiligne (12) est agencé latéralement à côté de la courroie de transport (4) et/ou du dispositif de pression par le haut (14).

6. Dispositif de transport de pièces à usiner selon l'une quelconque des revendications précédentes, **caractérisé en ce que** le dispositif de guidage rectiligne (12) est placé au niveau du dispositif de pression par le haut (14).

7. Dispositif de transport de pièces à usiner selon l'une quelconque des revendications précédentes, **caractérisé en ce que** le patin support (16) et/ou le rail de pression (18) s'étendent seulement le long d'un tronçon partiel du brin supérieur (4'), dont la longueur est de préférence inférieure à 20 %, de manière particulièrement préférée inférieure à 10 % de la longueur du brin supérieur (4').

8. Dispositif de transport de pièces à usiner selon l'une quelconque des revendications précédentes, **caractérisé en ce que** le patin support (16) et/ou le rail de pression (18) présentent au niveau de leurs tronçons tournés les uns vers les autres des éléments de coulissement (16', 18').

9. Dispositif de transport de pièces à usiner selon l'une quelconque des revendications précédentes, **caractérisé en ce que** le rail de guidage (8) dispose au niveau de sa face supérieure d'une goulotte de passage (8') adaptée par
